Europäisches Patentamt

European Patent Office

Office européen des brevets

(19)

(11) Veröffentlichungsnummer: **0 1 45 049**
**B1**

(12) **EUROPÄISCHE PATENTSCHRIFT**

(45) Veröffentlichungstag der Patentschrift:
03.05.89

(21) Anmeldenummer: **84201552.1**

(22) Anmeldetag: **29.10.84**

(51) Int. Cl.⁴: **H 01 R 43/05**

(54) **Abisoliervorrichtung, insbesondere für Leiter mit zäher Isolationsschicht.**

(30) Priorität: **09.11.83 SE 8306163**

(43) Veröffentlichungstag der Anmeldung:
**19.06.85 Patentblatt 85/25**

(45) Bekanntmachung des Hinweises auf die Patenterteilung:
**03.05.89 Patentblatt 89/18**

(84) Benannte Vertragsstaaten:
**CH DE FR GB IT LI SE**

(56) Entgegenhaltungen:
**DE-B- 2 827 587**
**GB-A- 2 083 400**
**US-A- 2 133 005**
**US-A- 3 703 840**
**US-A- 3 786 697**

(73) Patentinhaber: **C.A. Weidmüller GmbH & Co.,**
**Postfach 950 Paderborner Strasse 175,**
**D-4930 Detmold 14 (DE)**

(72) Erfinder: **Wiebe, Ulrich, Kibitzweg 2, D-4926 Dörentrup (DE)**
Erfinder: **Wilmes, Manfred, Ellerbruchweg 19, D-4930 Detmold (DE)**

(74) Vertreter: **Klauber, Tomas, Patentbyran Klauber & Co. AB Kungstensgatan 48, S-113 59 Stockholm (SE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Abisoliervorrichtung der im Oberbegriff des Patentanspruches 1 angegebenen Art und geht dabei von der DE-B-2 827 587 aus; sowie ferner auf ein Verfahren gemäß Patentanspruch 10 zur Herstellung eines Schneidmessers für diese Vorrichtung.

Es ist bereits bekannt (z. B. aus US-A 2 133 005) die Schneide eines Abisoliermessers annähernd halbkreisbogenförmig zu gestalten, damit die Isolationsschicht eines Leiters mit kreisförmigem Querschnitt von zwei zusammenarbeitenden Schneidmessern weitgehendst umgriffen und durchschnitten wird. Hierbei wird die Schneidkante üblicher Weise zu der einen Begrenzungsfläche der das Schneidmesser bildenden und eine gewisse Dicke aufweisenden Metallplatte verlegt, so daß sich zur anderen Begrenzungsfläche hin eine abgeschrägte Anlauffläche erstreckt die mit der erstgenannten Begrenzungsfläche einen scharfen Winkel einschließt.

Es ist ferner (z. B. aus GB-A-1 577 947 oder US-A-3 336 666) bekannt, im Anschluß an ein Abisoliermesser mit einer geradlinigen Schneidkante eine gegenüber der Schneidkante unbewegliche Lagefestlegungsanordnung für den abzuisolierenden Leiter anzuordnen, welche die Form eines sich von der Schneidkante weg verjüngenden, z. B. V-förmigen oder halbkreisförmigen Einschnittes aufweist, in den der Leiter hineingezwungen wird.

Die bekannten Anordnungen sind mit dem Nachteil behaftet, daß die Lagefestlegungsanordnung, um ein Eindringen der Schneidmesser zur gegebenen Tiefe in die Isolationsschicht zu ermöglichen, den Leiter im Augenblicke des ersten Kontaktes mit der Schneidkante nur mangelhaft, d. h. unsicher führen. Ferner ist die individuelle Herstellung von kreisbogenförmigen Schneidkanten ziemlich kostspielig.

Schließlich sind noch derartige Abisolierzangen (z. B. gemäß US-A-3 703 840 und gemäß DE-B-2 827 587) bekannt, bei denen das Abisoliermesserorgan in beiden Backen aus je einem Paket einzelner abgefederter Lamellen besteht, die jeweils in eine Schneidkante auslaufen. Die Schneidkanten aller Lamellen des Paketes verbinden sich zu einer Schneide, die sich der Form und Lage eines eingeführten Leiters anpaßt. Bei derartigen Zangen erübrigt sich eine Lagesfeststellungsanordnung für den eingelegten Leiter, denn das Problem wird auf entgegengesetzte Weise gelöst: wo immer entlang der gemeinsamen Schneide ein Leiter eingelegt wird, dort weichen die betreffenden Lamellen aus und bilden vorübergehend je eine annähernd halbkreisförmige Einbuchtung. Diese Lösung eignet sich jedoch nicht für alle Arten von Leitern, z. B. nicht für solche mit den kleinsten Durchmessern.

Die Erfindung gemäß dem Patentanspruch 1 stellt sich die Aufgabe, eine Abisoliervorrichtung für Leiter mit kreisrundem Querschnitt und insbesondere mit einer zähen Isolationsschicht, z. B. aus Teflon (eingetragenes Warenzeichen) zu schaffen, bei der der Leiter von der Lagefestlegungsanordnung sicher und eindeutig geführt wird spätestens von dem Augenblick der ersten Berührung mit der Schneidkante bis zu dem Augenblick, als die kreisbogenförmige Schneidkante bis zu ihrer vorgesehenen Endlage in die Isolationsschicht eingedrungen ist und entlang ihres ganzen Umfanges einen Trennschnitt durchgeführt hat.

Ferner löst die Erfindung gemäß dem Patentanspruch 10 die Aufgabe, die eingangs genannte Anlauffläche, und die kreisbogenförmige Partie Schneidkante auf besonders vorteilhafte Weise herzustellen.

Die Erfindung ist gekennzeichnet durch die in den kennzeichnenden Teilen der Patentansprüche 1 und 10 angegebenen Merkmale. Sie soll nun an Hand von Ausführungsbeispielen gemäß den beigefügten schematischen Zeichnungen näher erläutert werden.

Hierbei zeigt

Fig. 1 in Seitenansicht eine mit der erfindungsgemäßen Anordnung versehene Abisolierzange,

Fig. 2 und 3 zeigen in größerem Maß-stab in Vorderansicht bzw. im Schnitt entlang der Linie III–III eines der beiden in der Zange gemäß Fig. 1 angewandten gleichartigen Schneidmesser,

Fig. 4 und 5 zeigen in Perspektivansicht und in größerem Maß-stab die obere bzw. untere Innerbacke der Zange gemäß Fig. 1,

die Fig. 6 ist eine Vorderansicht der Lagesfestlegungsvorrichtung an den beiden Backen gemäß Fig. 4 und 5 mit einem eingelegten Leiter,

Fig. 7 zeigt in Seitenansicht, teilweise im Schnitt, eine etwas abgewandelte Form der Backe gemäß Fig. 5, und

Fig. 8 zeigt in einer Seitenansicht die Bearbeitung einer Vielzahl von Schneidmessern gemäß Fig. 2 und 3 in einem einzigen Arbeitsgang.

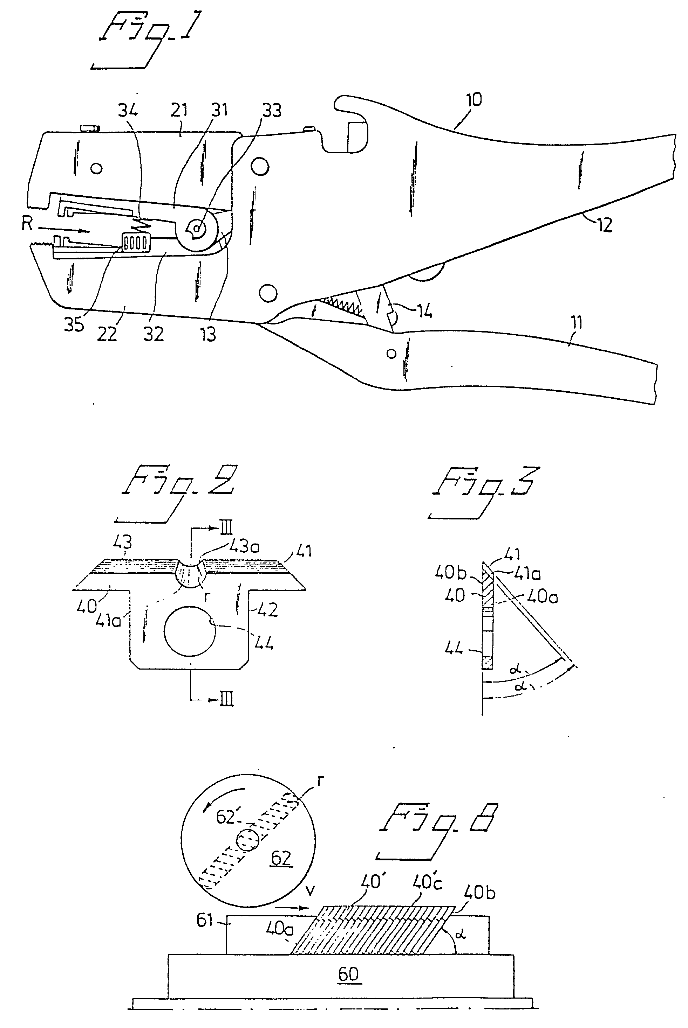

Gemäß Fig. 1 weist eine Abisolierzange 10 ein Paar zu- und voneinander verstellbarer und mit einem Handgriffspaar 11, 12 verbundener Außenbacken 21, 22 auf. In dem Außenbackenpaar 21, 22 ist ein Paar Innenbacken 31, 32 derart angeordnet, daß sie beim Betätigen der Handgriffe 11, 12 von den Außenbacken 21, 22 an einen (nicht dargestellten) Leiter angepresst, und ferner von einem Verstellmechanismus, der u.a. Hebelelemente 13 und 14 enthält, in Richtung des Pfeiles R zu den Handgriffen 11, 12 hin bewegt werden. Der Verstellmechanismus liegt außerhalb des Rahmens der vorliegenden Erfindung, wobei zwei Ausführungsformen davon in den deutschen bzw. amerikanischen Patenten DE-C-2 402 187 bzw. US-A-3 915 037 und DE-C-3 134 311 bzw. US-A-4 395 928 der Anmelderin näher beschrieben sind.

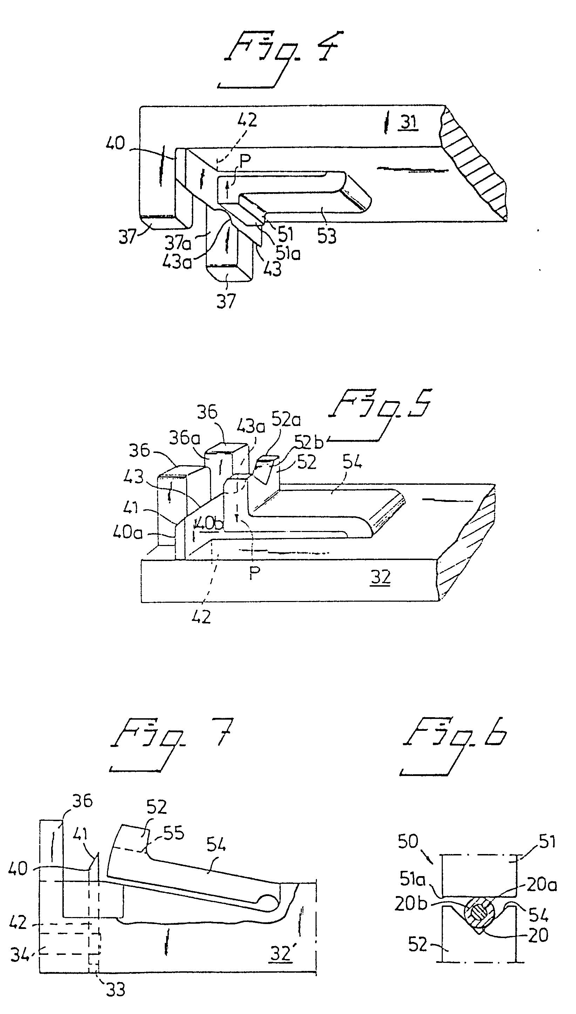

Die Innenbacken 31, 32 sind in vorbekannter Weise in der Anschlußstelle 33 an den Verstellmechanismus gelenkig miteinander verbunden, werden von einer sie auseinander spreizenden Feder 34 dauernd beaufschlagt und sind mit einem stellbaren Anschlag 35 für einen eingelegten abzuisolierenden Leiter versehen. Die Innenbacken 31, 32 sind ferner in einer Weise gestaltet, die aus den Fig. 4–7 deutlicher ersichtlich ist, wobei in den Fig. 2 und 3 eine vorgezogene Ausführungsform des Schneidmessers im Detail dargestellt ist.

In den beiden Innenbacken 31, 32 sind identische Schneidmesser 40 angeordnet, die jeweils eine vordere Begrenzungsfläche 40a und eine hintere Begrenzungsfläche 40b aufweisen. Eine unter einem Winkel α von z.B. 30° abgeschrägte Anlauffläche 41 verbindet entlang der einen Randkante des Schneidmesserkörpers die beiden Begrenzungsflächen 40a, 40b miteinander und bildet hierbei an der hinteren Begrenzungsfläche 40b eine geradlinige Schneidkante 43. Im mittleren Teil dieser geradlinigen Schneidkante 43 ist eine zumindest annähernd halbkreisförmige Schneidkanteneinbuchtung 43a mit einem Radius r angeordnet, wobei die Anlauffläche 41 in Anschluß an diese Einbuchtung eine zylindrische oder konische Partie 41a aufweist. Das Schneidmesser 40 weist ferner einen mittigen Ausläufer 42 auf, der zum Einstecken in eine entsprechende Öffnung in der jeweiligen Backe vorgesehen und mit einer Öffnung 44 zur Aufnahme eines Befestigungselementes wie Bolzen od. dgl. versehen ist.

In neuer Weise ist der eigentliche Arbeitsteil der beiden Innenbacken 31, 32 gemäß Fig. 4–7 gestaltet. Vor dem Schneidmesser 40 ist in der unteren Backe 32, an deren Stirnende, ein Paar aufrechtstehender innerer Leitstücke 36, und in der oberen Backe 31 ein Paar äußerer Leitstücke 37 angeordnet. Hierbei ist der gegenseitige Abstand der einander zugewandten Flächen 36a der inneren Leitstücke derartig, daß Leiter aller vorgesehener Durchmesser leicht hindurch geführt werden können, und der gegenseitige Abstand der einander zugekehrten Flächen 37a der äußeren Leitstücke ist derartig, daß das innere Leitstückpaar von dem äußeren Leitstückpaar umfaßt werden kann, wenn die Backen 31, 32 geschlossen werden. In geschlossenem Zustand der Zange bilden somit die Stirnflächen der beiden Leitstückpaare eine Wandung, in der eine von den einander zugekehrten Flächen 36a der inneren Leitstücke 36 begrenzte mittige Öffnung vorhanden ist welche zur groben Zentrierung oder Vorzentrierung eines zu bearbeitenden Leiters dient.

Das Schneidmesser 40 ist mit seinem Ausläufer 42 in einem entsprechenden Spalt 33′ im Körper der jeweiligen Backe 31, 32 eingeschoben und mittels eines Bolzens 34 etc., der durch die Öffnung 44 hindurch geht, gesichert (Fig. 7). Hierbei liegt das Schneidmesser 40 mit seiner Vorderfläche 40a dicht an den Leitstücken 36 bzw. 37 an, wobei hinter seiner hinteren Fläche 40b jeweils ein Organ oder Glied 51, 52 einer Lagefestlegungsanordnung 50 (Fig. 6) federnd auf und ab bewegbar angeordnet ist. Beide Glieder 51, 52 verlaufen ungefähr parallel mit den Begrenzungsflächen 40a, 40b des jeweiligen Schneidmessers 40 und werden von einem winkelrecht angeschlossenen Trägerteil 53, 54 getragen. Die Trägerteile 53, 54 sind als im Körper der jeweiligen Backe 31, 32 federnd verankerte Arme und/oder als federnde Arme gestaltet (die ganze Backe inklusive der Teile 51–54 wird vorzugsweise einstückig aus geeignetem Kunststoff hergestellt).

Die äußere freie Kante 51a des Organes 51, welches ein Gegendruckglied bildet, ist geradlinig, wogegen in der äußeren freien Kante 52a des Organes 52, welches ein Führungsglied bildet, mittig eine V-förmige Einkerbung 52b vorgesehen ist. Die Einkerbung 52b ist genau zur benachbarten halbkreisförmigen Schneidkantenpartie 43a zentriert (und natürlich sind auch die beiden Partien 43a in den beiden Schneidmessern 40 miteinander genau zentriert).

Wenn ein abzuisolierender Leiter 20, der einen leitenden Kern 20a und eine Isolationsschicht 20b aufweist (Fig. 6), in die Zange 10 eingelegt wird, wird er vorerst von den inneren Leitstücken 36 grob zentriert. Diese, zusammen mit den äußeren Leitstücken 37, verhindern, daß ein Leiter an anderer Stelle entlang der Schneidkante 43 eingelegt wird, als wo sich die Einbuchtungen 43a und die Anordnung 50 befinden. Wenn dann durch Betätigung der Handgriffe 11, 12 die beiden Backenpaare 21, 22 und 31, 32 aneinander angenähert werden, drückt die ebene Kante 51a des Organes 51 den Leiter 20 (Fig. 6) in die V-förmige Einkerbung 52b des Organes 52 hinein. Dieses Eindrükken geschieht spätestens, wenn die Isolationsschicht 20b des Leiters 20 die Schneidkanten 43 bzw. 43a zum ersten Mal berührt, im allgemeinen jedoch noch früher, dank der in unbelastetem Zustand vorstehenden Lage der abgefederten Organe 51, 52 gegenüber der Schneidkante des betreffenden Schneidmessers 40 (in Fig. 4 ist das Glied 51 in belastetem, d.h. eingedrücktem, und in Fig. 5 das Glied 52 in unbelastetem, d.h. vorstehendem Zustand dargestellt). Bei weiterer Annäherung der Backen 31, 32 federn die beiden Organe 51, 52 je nach Bedarf im Sinne der Pfeile P zurück (das Organ 51 z.B. in die in Fig. 4 dargestellte Lage), ohne jedoch den erfaßten Leiter 20 freizugeben. Dieser Leiter wird vielmehr so lange von den Organen oder Gliedern 51, 52 festgehalten, bis sich die beiden Backenpaare 21, 22 und 31, 32 am Ende ihrer von dem eingangs erwähnten Verstellmechanismus herbeigeführten Rückwärtsbewegung im Sinne des Pfeiles R wieder automatisch öffnen. Dies bringt den zusätzlichen Vorteil mit sich, daß der von den Schneidmessern 40 abgetrennte Teil der Isolation 20b des Leiters 20 zuverläßlich abgestreift wird. Man kann daher, um einer Beschädigung des Leiterkernes 20a durch die Schneidkantenpartien 43a mit Sicherheit vorzubeugen, eventuell diese Schneidkantenpartien so bemessen und anordnen, daß in der Endlage der Backen eine unbedeutende Schicht der Isolation 20b dicht am Kern 20a undurchschnitten verbleibt, um anschließend bei der Rückwärtsbewegung des inneren Backenpaares dank der Klemmwirkung der Organe 51, 52 abgerissen zu werden.

Eine insbesondere vorteilhafte Anfertigungsweise der Schneidmesser 40 ergibt sich aus Fig. 8. Eine Vielzahl von Rohlingen 40′ werden in einer Spannvorrichtung 61 derart am Arbeitstisch 60 einer spanabhebenden Bearbeitungsmaschine wie Schleif- oder Fräsmaschine festgespannt, daß sie alle den vorerwähnten Winkel α mit der Ebene

des Arbeitstisches 60 bzw. mit der hiermit parallelen Vorschubrichtung V eines Arbeitswerkzeuges einschließen. Dann können vorerst die ebenen Anlaufflächen 41 und damit auch die geradlinigen Schneidkanten 43 derart hergestellt werden, daß ein Werkzeug wie rotierende Fräse oder Schleifscheibe mit zylindrischer Arbeitsfläche parallel mit der Ebene des Arbeitstisches 60 über die freien oberen Kanten der Rohlinge 40' geführt wird. Danach wird in dem in Fig. 8 dargestellten weiteren Arbeitsgang ein Werkzeug 62 wie rotierende Fräse oder Schleifscheibe angewandt, welches ein Profil 62' aufweist, das an der Peripherie im Querschnitt die gleiche Form wie die Einbuchtung 43a der Schneidkante 43 aufweist (Radius r). Beim Durchgang des Werkzeuges 62, welches etwas tiefer geführt wird als das vorgehende zylindrische Werkzeug, werden somit an allen zu Schneidmessern 40 bereits verwandelten Rohlingen 40' die Partien 41a und 43a angefertigt.

Im Rahmen der Erfindung sind ausser der beschriebenen Beispiele zahlreiche weitere Alternativen möglich, so insbesondere:

- nur eines der Organe 51, 52 kann abgefedert sein;
- anstelle der V-förmigen Einkerbung wird eine andere sich verjüngende Einkerbung, z.B. eine halbkreisförmige, angewandt;
- beide Organe 51, 52 werden mit einer Einkerbung versehen;
- die Organe 51, 52 werden auf andere Weise abgefedert in den Backen 31, 32 montiert, beispielsweise mit Hilfe von Federelementen, wobei die Trägerarme 53, 54 entfallen;
- das äußere Leitstückpaar oder beide Leitstückpaare können entfallen;
- die Schneidmesser 40 können ohne den mittigen Ausläufer 42 hergestellt und befestigt werden.
- die gerade Schneidkante 43 beiderseits der Einbuchtung 43a kann von einer unscharfen, nicht schneidenden Kante, gegebenen Falls beliebiger Form, ersetzt werden.

**Patentansprüche**

1. Abisoliervorrichtung (10), insbesondere für Leiter (20) mit zäher Isolationsschicht (20b), umfassend ein Paar von- und zueinander bewegbarer Backen (31; 32), von denen jede mit einem eine starre Schneidkante (43, 43a) aufweisenden Schneidmesser (40) versehen ist; ein Antriebsorgan (11, 12, 13, 14) zur Durchführung der genannten Backenbewegung; sowie eine Anordnung (50) zum eindeutigen Festlegen der Lage eines eingelegten Leiters (20) gegenüber der Schneidkante (43, 43a) zumindest eines der Schneidmesser (40), dadurch gekennzeichnet, daß die Lagesfestlegungsanordnung (50) für den Leiter (20) folgende Teile aufweist:
- ein Führungsglied (52), das in der einen Backe (32) hinter dem einen Schneidmesser (40) auf und ab bewegbar angeordnet ist und eine äußere freie Kante (52a) aufweist, die (52a) an derjenigen Stelle, wo der eingelegte Leiter (20) von der Schneidkante (43, 43a) des genannten Schneidmessers (40) angegriffen werden soll, eine sich verjüngende Einkerbung (52b) aufweist;
- einen in der betreffenden Backe (32) angeordneten federnden Trägerteil (54) für das Führungsglied (52) derart, dass es den Leiter bereits dann erfaßt und führt, bevor die Schneidkante (43, 43a) des Schneidmessers (40) in die Isolationsschicht (20b) einzudringen beginnt, und sich dann federnd zurückdrängen läßt bis die Schneidkante ihre Endlage in der Isolationsschicht erreicht hat und der das Führungsglied (52) in unbelastetem Zustand in einer gegenüber der benachbarten Schneidkante (43, 43a) vorstehenden Lage hält und bei Belastung dem Führungsglied (52) ein Zurückweichen ermöglicht, ohne daß dabei der Leiter (20) freigegeben wird;
- ein in der anderen Backe (31) angeordnetes Gegendruckglied (51), welches den eingelegten Leiter (20) an das Führungsglied (52) andrückt, wenn sich die Backen (31; 32) zueinander bewegen.

2. Abisoliervorrichtung gemäß Patentanspruch 1, dadurch gekennzeichnet, daß das Gegendruckglied (51) ebenfalls von einem federnd angeordneten Trägerteil (53) getragen ist, der das Gegendruckglied (51) in unbelastetem Zustand in einer gegenüber der benachbarten Schneidkante (43) vorstehenden Lage hält und bei Belastung dem Gegendruckglied (51) ein Zurückweichen ermöglicht, ohne daß dabei der Leiter (20) freigegeben wird.

3. Abisoliervorrichtung gemäß Patentanspruch 1 oder 2, dadurch gekennzeichnet, daß der federnde Trägerteil (53; 54) von einem in Längsrichtung der betreffenden Backe verlaufenden federnden oder federnd verankerten Trägerarm gebildet ist.

4. Abisoliervorrichtung gemäß Patentanspruch 3, dadurch gekennzeichnet, daß ein federnder Trägerarm (53; 54) aus Kunststoff besteht und einstückig verfertigt ist sowohl mit der Backe (31, 32), in der er angeordnet ist, als auch mit dem Führungs- oder Gegendruckglied (51; 52) das er trägt, die beide ebenfalls aus Kunststoff bestehen.

5. Abisoliervorrichtung gemäß einem der vorhergehenden Patentansprüche, dadurch gekennzeichnet, daß das Gegendruckglied (51) eine ununterbrochene, geradlinige Eingriffskante (51a) aufweist.

6. Abisoliervorrichtung gemäß einem der vorgehenden Patentansprüche, dadurch gekennzeichnet, daß dem Schneidmesser (40) in einer der Backen (32) ein Paar Leitstücke (36) zur groben Zentrierung eines eingelegten Leiters bezüglich der genannten sich verjüngende Einkerbung (52b) zugeordnet ist.

7. Abisoliervorrichtung gemäß Patentanspruch 6, dadurch gekennzeichnet, daß an der anderen Backe (31) ein zweites Paar von Leitstücken (37) vorgesehen ist, welche bei Anfang der Schließbewegung das erste Paar von Leitstücken (36) umfassen.

8. Abisoliervorrichtung gemäß einem der vorgehenden Patentansprüche, dadurch gekennzeichnet, daß das Schneidmesser (40) in an sich bekannter Weise eine zumindest annähernd halbkreisförmige Schneidkanteneinbuchtung (43a) aufweist und daß die genannte sich verjüngende Einkerbung (52b) zu dieser Einbuchtung zentriert ist.

9. Abisoliervorrichtung gemäß Patentanspruch 8, dadurch gekennzeichnet, daß die Schneidkante (43) des Schneidmessers (40) von der Schnittlinie einer Begrenzungsfläche (40b) des Messerkörpers mit einer unter einem vorbestimmten Winkel (α) schräg zu dieser verlaufenden Anlauffläche (41) gebildet wird, welche im Bereich der zumindest annähernd halbkreisförmigen Einbuchtung (43a) der Schneidkante (43) walzen- oder kegelförmig gestaltet ist.

10. Verfahren zum Herstellen von Schneidmessern (40) der Abisoliervorrichtung gemäß Patentanspruch 9, dadurch gekennzeichnet, daß eine Vielzahl von Rohlingen (40') in derartiger Schräglage am Arbeitstisch (60) einer spanabhebenden Bearbeitungsmaschine verspannt werden, daß ihre Begrenzungsflächen (40a, 40b) mit der Vorschubrichtung (V) eines Arbeitswerkzeuges (62) den gleichen Winkel (α) einschließen, der zwischen der Anlauffläche (41) und der anschließenden Begrenzungsfläche (40b) bestehen soll, und daß das Arbeitswerkzeug an der Peripherie im Querschnitt (62') der Form der Einbuchtung (43a) entspricht und bei vorgewähltem Tiefgang entlang der Oberkante aller Rohlinge geführt wird.

## Claims

1. A stripping device (10), particularly for conductors (20) with a tough insulation layer (20b), comprising a pair of jaws (31; 32) movable towards and away from each other, each of which is provided with a cutting blade (40) having a stiff cutting edge (43, 43a); a driving member (11, 12, 13, 14) for performing said jaw movement; and an arrangement (50) for clear determination of the position of an inserted conductor (20) with respect to the cutting edge (43, 43a) of at least one of said cutting blades (40), characterized in that the arrangement (50) for determining the position of the conductor (20) comprises the following parts:
- a guide member (52), which is arranged movably up and down in one of the jaws (32) behind one of the cutting blades (40) and has an outer free edge (52a) [in] which (52a) has, at the place where the inserted conductor (20) should be gripped by the cutting edge (43, 43a) of the cutting blade (40), a tapering notch (52b);
- a resilient carrier member (54) for the guide member (52), the carrier member being situated in the relevant jaw (32) such that it grips and guides the conductor even before the cutting edge (43, 43a) of the cutting blade (40) begins to penetrate into the insulation layer (20b) and may then be resiliently forced back until the cutting edge has reached its end position in the insulation layer, and holds the guide member (52) in unloaded state in a position in which it projects with respect to the adjacent cutting edge (43, 43a) and when loaded enables the guide member (52) to give way without thereby releasing the conductor (20);
- a counterpressure member (51) which is arranged in the other jaw (31) and presses the inserted conductor (20) onto the guide member (52) when the jaws (31; 32) move towards each other.

2. A stripping device according to claim 1, characterized in that the counterpressure member (51) is also carried by a resiliently arranged carrier member (53) which holds the counterpressure member (51) in unloaded state in a position projecting with respect to the adjacent cutting edge (43) and when loaded enables the counterpressure member (51) to give way without thereby releasing the conductor (20).

3. A stripping device according to claim 1 or 2, characterized in that the resilient carrier member (53; 54) is formed by a resilient or resiliently anchored carrier arm extending in the longitudinal direction of the relevant jaw.

4. A stripping device according to claim 3, characterized in that a resilient carrier arm (53; 54) is made of plastics and is made in one piece both with the jaw (31; 32), in which it is situated, and with the guiding or counter-pressure member (51; 52) which it carries, both of which are also made of plastics.

5. A stripping device according to one of the preceding claims, characterized in that the counterpressure member (51) has a continuous, rectilinear engagement edge (51a).

6. A stripping device according to one of the preceding claims, characterized in that with the cutting blade (40) in one of the jaws (32) is associated a pair of guide members (36) for rough centering of an inserted conductor with respect to said tapering notch (52b).

7. A stripping device according to claim 6, characterized in that on the other jaw (31) is provided a second pair of guide members (37) which, at the beginning of the closing movement, surrounds the first pair of guide members (36).

8. A stripping device according to one of the preceding claims, characterized in that the cutting blade (40) has, in a manner known per se, at least approximately semicircular recess (43a) in the cutting edge, and that said tapering notch (52b) is centered with respect to this recess.

9. A stripping device according to claim 8, characterized in that the cutting edge (43) of the cutting blade (40) is formed by the intersection line of a limiting surface (40b) of the blade body and a sloping face (41) which extends at a preselected angle (α) obliquely thereto and which is in the at least approximately semicircular recess (43a) in the shape of a cylinder or cone.

10. A method for the manufacture of cutting blades of a stripping device (40) according to claim 9, characterized in that a plurality of blanks (40') is clamped on the working table (60) of a cutting machine in such oblique position that their limiting surfaces (40a, 40b) make with the direction of advance (V) of a working tool (62) the same angle (α) which should exist between the sloping face (41) and the adjoining limiting surface (40b), and that the working tool corresponds on the periphery in cross-section (62') to the shape of the recess (43a) and is guided in a preselected low position along the upper edge of all the blanks.

**Revendications**

1. Appareil à dénuder (10), en particulier pour conducteurs (20) à couche isolante (20b) tenace, comprenant une paire de mors (31, 32) mobiles, propres à être écartés et rapprochés et pourvus chacun d'un couteau (40) présentant une arête coupante rigide (43, 43a), un organe moteur (11, 12, 13, 14) pour l'exécution du mouvement précité des mors, et un dispositif (50) pour la fixation nette de la position d'un conducteur introduit (20) par rapport à l'arête coupante (43, 43a) d'au-moins un des couteaux (40), caractérisé en ce que le dispositif (50) de fixation de la position du conducteur (20) présente les éléments suivants:
- un élément de guidage (52) placé dans un des mors (32), derrière un des couteaux (40), de façon à pouvoir monter et descendre et présentant un bord libre extérieur (52a) qui présente une encoche de largeur décroissante (52b) à l'endroit où le conducteur introduit (20) doit être attaqué par l'arête coupante (43, 43a) dudit couteau (40),
- un élément support élastique (54) destiné à l'élément de guidage (52) et placé dans le mors considéré (32) de sorte qu'il saisisse et guide déjà le conducteur avant que l'arête coupante (43, 43a) du couteau (40) commence à pénétrer dans la couche isolante (20b), et qu'il puisse ensuite être repoussé élastiquement jusqu'à ce que l'arête coupante ait atteint sa position extrême dans la couche isolante, ledit élément support maintenant l'élément de guidage (52), à l'état non chargé, dans une position en saillie par rapport à l'arête coupante (43, 43a) voisine, et permettant, au chargement de l'élément de guidage (52), un recul sans que le conducteur (20) soit alors libéré, et
- un élément de contre-pression (51) placé dans l'autre mors (31) et serrant le conducteur introduit (20) contre l'élément de guidage (52) lorsque les mors (31, 32) se rapprochent.

2. Appareil à dénuder selon la revendication 1, caractérisé en ce que l'élément de contre-pression (51) est également porté par un élément support monté élastiquement (53) qui le maintient, à l'état non chargé, dans une position en saillie par rapport à l'arête coupante (43) voisine, et qui permet, au chargement de l'élément de contre-pression (51), un recul sans que le conducteur (20) soit alors libéré.

3. Appareil à dénuder selon l'une des revendications 1 et 2, caractérisé en ce que l'élément support élastique (53, 54) est formé d'un bras support élastique ou ancré élastiquement qui s'étend dans la direction longitudinale du mors correspondant.

4. Appareil à dénuder selon la revendication 3, caractérisé en ce qu'un bras support élastique (53, 54) est en plastique et fabriqué d'une seule pièce à la fois avec le mors (31, 32) dans lequel il est placé et avec l'élément de guidage ou de contre-pression (51, 52) qu'il porte, qui sont tous les deux également en plastique.

5. Appareil à dénuder selon l'une des revendications précédentes, caractérisé en ce que l'élément de contre-pression (51) présente un bord de prise rectiligne ininterrompu (51a).

6. Appareil à dénuder selon l'une des revendications précédentes, caractérisé en ce qu'une paire de pièces directrices (36) destinée au centrage grossier d'un conducteur introduit, par rapport à ladite encoche de largeur décroissante (52b), est adjointe au couteau (40) placé dans l'un (32) des mors.

7. Appareil à dénuder selon la revendication 6, caractérisé en ce que sur l'autre mors (31) est prévue une deuxième paire de pièces directrices (37) qui, au début du mouvement de fermeture, enserrent la première paire de pièces directrices (36).

8. Appareil à dénuder selon l'une des revendications précédentes, caractérisé en ce que l'arête coupante du couteau (40) présente de façon connue une échancrure au-moins approximativement semi circulaire (43a) et en ce que ladite encoche de largeur décroissante (52b) est centrée sur cette échancrure.

9. Appareil à dénuder selon la revendication 8, caractérisé en ce que l'arête coupante (43) du couteau (40) est formée par l'intersection d'une face (40b) du corps de couteau avec une rampe (41) faisant un angle déterminé (α) avec elle et qui est cylindrique ou conique dans la zone de l'échancrure au-moins approximativement semi-circulaire (43a) de l'arête coupante (43).

10. Procédé de fabrication de couteaux (40) de l'appareil à dénuder selon la revendication 9, caractérisé en ce qu'on serre un grand nombre d'ébauches (40'), sur la table porte-pièce (60) d'une machine-outil travaillant par enlèvement de matière, dans une position inclinée telle que leurs faces (40a, 40b) fassent avec la direction d'avance (V) d'un outil (62) l'angle (α) qui doit exister entre la rampe (41) et la face contiguë (40b), et en ce que l'outil, à sa périphérie, corresponde, en coupe (62'), à la forme de l'échancrure (43a) et est passé, avec une profondeur de passe fixée, le long du bord supérieur de toutes les ébauches.

Fig. 1

Fig. 2

Fig. 3

Fig. 8

Fig. 4

Fig. 5

Fig. 7

Fig. 6